# EUROPEAN PATENT SPECIFICATION

(11) **EP 2 961 051 B1**
(45) Date of publication and mention of the grant of the patent: **06.02.2019**
(21) Application number: 15173906.7
(22) Date of filing: 25.06.2015
(51) Int. Cl.: H02M 3/158

(54) **BOOST CIRCUIT, MOTOR DRIVING MODULE, AND REFRIGERATING APPARATUS**
BOOST-SCHALTKREIS, MOTORANTRIEBSMODUL UND KÜHLVORRICHTUNG
CIRCUIT DE SURVOLTAGE, MODULE D'ENTRAÎNEMENT DE MOTEUR ET APPAREIL DE RÉFRIGÉRATION

(30) Priority: 27.06.2014 JP 2014132025
(43) Date of publication of application: 30.12.2015
(73) Proprietor: Hitachi-Johnson Controls Air Conditioning, Inc., Tokyo 105-0022 (JP)
(72) Inventor: LI, Dongsheng, Tokyo, 100-8280 (JP); NOTOHARA, Yasuo, Tokyo, 100-8280 (JP); ANDO, Tatsuo, Tokyo, 105-0022 (JP)
(74) Representative: MERH-IP Matias Erny Reichl Hoffmann Patentanwälte PartG mbB

(56) References cited:
- US-A- 5 889 663
- US-A1- 2013 342 139
- US-A1- 2014 169 049

## Description

### BACKGROUND OF THE INVENTION

### Field of the Invention

The present invention relates to a rectifier that converts AC to DC, a boost circuit, a motor driving module, and a refrigerating apparatus.

### Description of Prior Art

A motor driving system configured using a rectifier that converts an AC power source to DC and an inverter circuit that converts DC to AC has been widely used in home appliance and industrial equipment. In order to improve the annual performance factor (APF), it has been desirable for a refrigerating apparatus such as an air conditioner to improve the efficiency in the middle to low speed operation range where the motor is mostly operated. Therefore, the motor tends to be designed so that the motor induced voltage (back electromotive force) becomes high in recent years.

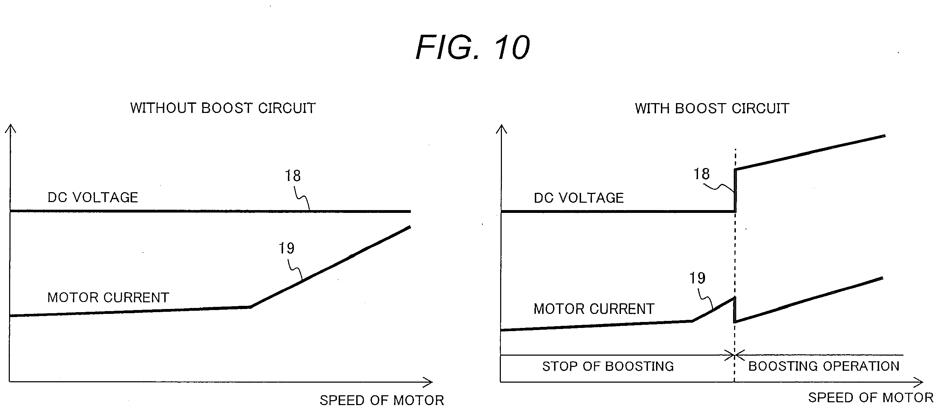

However, since the motor induced voltage (back electromotive force) is proportional to the rotating speed of a motor, the output voltage of an inverter becomes lower than the induced voltage of the motor by limitation of DC voltage in the range of high-speed operation, and the motor cannot be normally driven in some cases. As a conventional countermeasure, there is a method such as field-weakening control. However, as shown in FIG. 10, the losses of the motor and inverter are increased according to an increase in the reactive current of the motor, and the total efficiency of the system is deteriorated. Instead, it is effective that the DC voltage is boosted to increase the output voltage of the inverter in the case where the output voltage of the inverter is insufficient.

A circuit configuration of boosting after converting AC voltage to DC has been developed from a long time ago, and a plurality of methods have been proposed. For example, using a three-phase PWM converter configured using six semiconductor power devices, the harmonic reduction of input current and the boosting control of output DC voltage can be performed. However, a plurality of semiconductor power devices and complicated control devices are necessary, and thus the cost of the apparatus is significantly increased. The product cost is considered to be important for consumer and industrial apparatuses such as air conditioners and general-purpose inverters, and thus it has been desirable to use inexpensive boosting devices.

Further, as a simple boosting device, for example, Japanese Patent No. 4937281 and Japanese Unexamined Patent Application Publication No. 2010-233439 describe a boosting chopper circuit configured using a reactor, a semiconductor switching device, and a diode provided on the output side of a diode rectifier.

In the boost circuit described in Japanese Patent No. 4937281, DC voltage can be adjusted by one boosting chopper.

However, since the capacity of a three-phase power receiving apparatus is generally large, an increase in size and cost of the parts (power devices and reactors) configuring the boosting chopper is inevitable..

As described in Japanese Unexamined Patent Application Publication No. 2010-233439, there is a method in which a plurality of boosting choppers are arranged in parallel to perform an interleave operation. Although the number of parts of the boosting chopper is increased, the capacity of each part is reduced. Thus, inexpensive general-purpose parts can be used. However, in order to control each boosting chopper, a current detection device and a control circuit are necessary for each boosting chopper, and the apparatus becomes complicated.

In US 2014/0169049 A1, a controller for a power converter is described. The controller includes a current sense device coupable in series with switched terminals of power switches of interleaved switching regulators and configured to produce a current-sense signal. The controller also includes an error amplifier configured to produce an error signal as a function of a characteristic of the power converter. The patent application publication US2013342139A1 discloses power converting device having the features of the preamble of claim 1.

### SUMMARY OF THE INVENTION

An object of the present invention is to provide a boost circuit, a motor driving module, and a refrigerating apparatus that detect the current of each power device using one current detection device, and adjust the on width of each power device to substantially equalize the current of each power device. The present invention is defined in claim 1.

There is provided a boost circuit including: a rectifying circuit for an AC power source; a plurality of reactors that are connected in parallel to the positive electric potential side of the rectifying circuit; a plurality of power devices that are connected in series to the plurality of reactors to turn on or off current; a single resistor that is connected between the plurality of power devices and the negative electric potential side of the rectifying circuit; and/or a control unit alternately controls the plurality of power devices so that the current flowing to the plurality of power devices is substantially equalized.

According to the present invention, the current of each power device is detected using one current detection device, and the on width of each power device is adjusted, so that the current of each power device can be substantially equalized. Therefore, the current detection circuit and control can be simplified, and thus it is possible to provide a boost circuit, a motor driving module, and a refrigerating apparatus at low cost and with high efficiency. The other configurations, actions, and effects of the present invention will be described in embodiments
shown below.

### BRIEF DESCRIPTION OF DRAWINGS

FIG. 1 is a configuration diagram of a boost circuit according to one embodiment of the present invention;
FIG. 2 is a functional block configuration diagram of a control unit of the boost circuit according to one embodiment of the present invention;
FIG. 3 is a configuration diagram of a ripple compensation controller of the control unit of the boost circuit according to one embodiment of the present invention;
FIG. 4 is a configuration diagram of an A/D and current separator of the control unit of the boost circuit according to one embodiment of the present invention;
FIG. 5 is a configuration diagram of a modulation factor adjuster of the control unit of the boost circuit according to one embodiment of the present invention;
FIG. 6 is an explanatory diagram of a current detection method of the boost circuit according to one embodiment of the present invention;
FIG. 7 is an explanatory diagram of a current equalization control effect of the boost circuit according to one embodiment of the present invention;
FIG. 8 is an explanatory diagram of the current equalization control effect of the boost circuit according to one embodiment of the present invention;
FIG. 9 is a circuit configuration diagram of a motor driving module according to one embodiment of the present invention;
FIG. 10 is an explanatory diagram of a boosting effect of the motor driving module according to one embodiment of the present invention;
FIG. 11 is an external diagram of the motor driving module according to one embodiment of the present invention; and
FIG. 12 is a configuration diagram of a refrigerating apparatus according to one embodiment of the present invention.

### DETAILED DESCRIPTION OF THE INVENTION

Hereinafter, embodiments of the present invention will be described using the drawings.

### First Embodiment

### (Configuration of apparatus)

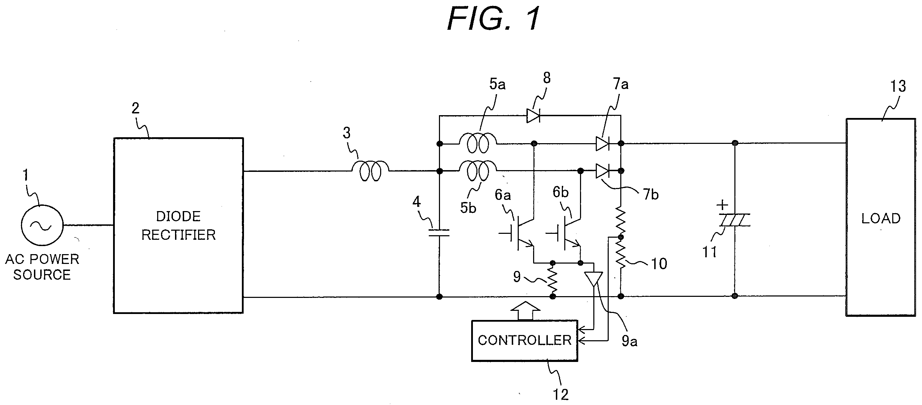

FIG. 1 is a configuration diagram of a boost circuit according to a first embodiment of the present invention. The boost circuit includes a diode rectifier 2 connected to an AC power source 1 and a power factor improvement reactor 3 that is provided on the DC side of the diode rectifier 2 and is connected to one end of an output terminal of the diode rectifier 2 to improve the power factor. The reactor 3 improves the input power factor from the AC power source. The reactors 3 is connected to the positive electric potential side of the diode rectifier 2 (rectifying circuit). Between the other end of the power factor improvement reactor 3 and the other end of the output terminal of the diode rectifier 2, arranged is a highfrequency noise suppressing capacitor 4 to suppress highfrequency noise generated from a boosting chopper circuit. Specifically, a low-pass filter (LPF) is configured. Only a common mode filter that can easily filter noise on the AC side may be installed.

In addition, two boosting reactors 5a and 5b are provided in parallel to the other end of the power factor improvement reactor 3 in the boost circuit of the embodiment. Further, power devices 6a and 6b (switching devices) that turn on or off current flowing to each of the boosting reactors 5a and 5b are provided in series to the boosting reactors 5a and 5b, respectively.

Fast recovery diodes (FRDs) 7a and 7b that perform fast recovery are arranged to the boosting reactors 5a and 5b on the side opposite to the power factor improvement reactor 3. Between the input side and the output side of the boosting chopper circuit configured by including the boosting reactors 5a and 5b and the power devices 6a and 6b, provided is a current bypass diode 8 to bypass the boosting chopper circuit.

When the operation of the boost circuit stops, current of the boosting reactors 5a and 5b and the fast recovery diodes (FRDs) 7a and 7b can be allowed to bypass through the current bypass diode 8 that is a general-purpose rectifying diode. Thus, a conduction loss when the boosting operation stops can be reduced.

In the embodiment, one current detection device 9 is provided between the power devices 6a and 6b (switching devices) that turn on or off current and the other end of the diode rectifier 2. Specifically, one current detection device 9 is provided between the emitter terminal or the source terminal of each of the power devices 6a and 6b and the negative electric potential terminal of input voltage. The current detection device 9 employs a current sampling resistor and an amplifying circuit 9a to reduce the cost as shown in FIG. 1. In place of the current sampling resistor, a current detection device such as a current sensor configured using hall elements may be used.

Between the output side of the fast recovery diodes (FRDs) 7a and 7b and the other end of the diode rectifier 2, provided is a voltage dividing resistor 10 for voltage detection, and a smoothing capacitor 11 for output voltage is provided in parallel to the voltage dividing resistor 10 for voltage detection. A controller 12 of the boost circuit is configured using a semiconductor arithmetic device such as an analog circuit, a microcomputer, or a DSP (Digital Signal Processor), and processes DC voltage signals and boosting target voltage from a voltage detection device of the voltage dividing resistor 10. Further, the controller 12 generates an on/off control signal for each of the power devices 6a and 6b. In this case, voltage signals are detected by the inexpensive voltage dividing resistor 10 to reduce the cost. However, in place of the voltage dividing resistor, a device such as a DC voltage sensor may be used.

In the embodiment, the boosting chopper circuits are connected in parallel using two boosting reactors 5a and 5b. However, the boosting chopper circuits may be configured by arranging two or more boosting reactors in parallel according to boosting voltage and output power capacity.

In the embodiment as described above, the number of parts is increased because a plurality of boosting reactors 5a and 5b are provided in parallel. However, the current is equally dispersed, and thus the current flowing to one boosting chopper circuit can be reduced. Accordingly, inexpensive general-purpose components can be used for the power devices 6a and 6b and the power factor improvement reactor 3. Especially, the power factor improvement reactor 3 is a large part in size, and the cost thereof is high. Thus, a significant effect of cost reduction can be realized.

Further, the equivalent frequency of ripple components of the entire input current is increased several times by the interleave operation of each boosting chopper, and thus the noise filter can be easily designed. It should be noted that current is equally dispersed to a plurality of boosting chopper circuits, and thus the control signal of each of the power devices 6a and 6b needs to be adjusted by detecting each current. Thus, the control by the controller 12 will be described below.

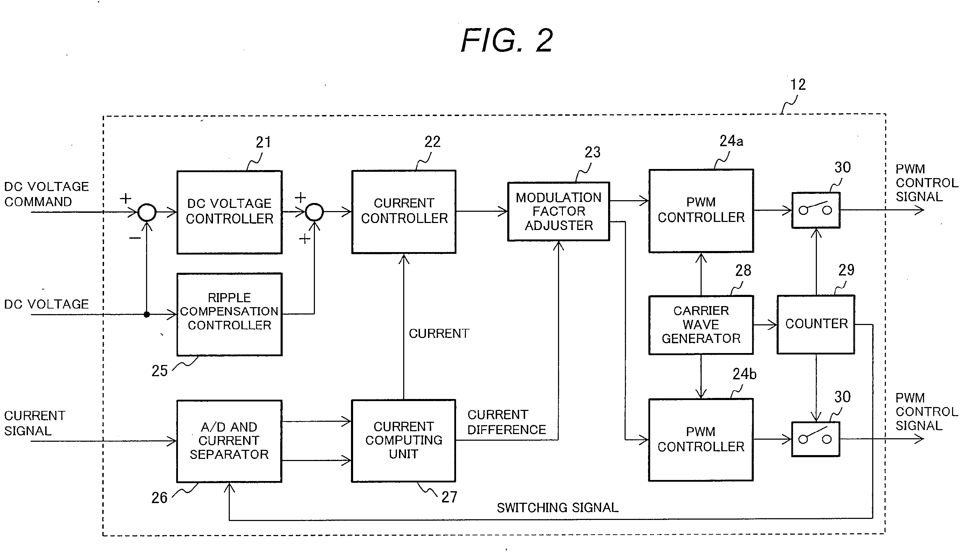

FIG. 2 is a functional block configuration diagram of the controller 12.

### (Voltage control)

Specifically, a DC voltage controller 21 calculates a current command using a difference between the DC voltage detected on the basis of the DC voltage signal from the voltage dividing resistor 10 and the boosting target voltage. Further, a ripple compensation controller 25 extracts the ripple components of the DC voltage using a device such as a bandpass filter (BPF), and creates a cancellation controlled variable to suppress the ripple. In addition, the cancellation controlled variable is added to the current command.

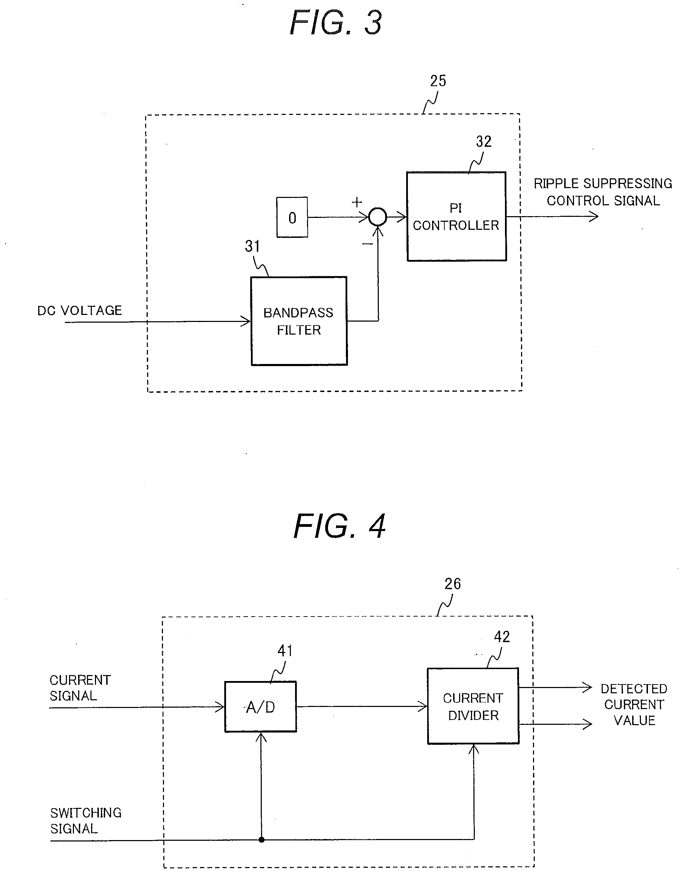

FIG. 3 shows an internal configuration of the ripple compensation controller 25. In the case of a single-phase power source, the center frequency of a bandpass filter 31 is twice the frequency of the power source. In the case of a three-phase power source, the center frequency of the bandpass filter 31 is six times the frequency of the power source. Only the voltage ripple components are left in the output of the bandpass filter 31. A ripple suppressing control signal is created using a PI controller 32 so as to eliminate the voltage ripple components.

A current controller 22 calculates a control modulation factor using the current commands from the DC voltage controller 21 and the ripple compensation controller 25 and the current signal from a current computing unit 27. The control modulation factor is a controlled variable to generate a PWM control signal while being compared with a carrier wave by a PWM controller 24a.

### (Current detection)

A current signal from the current detection device 9 is converted from analog to digital by an A/D and current separator 26, and is divided as current flowing to each of the power devices 6a and 6b using an interleave switching signal.

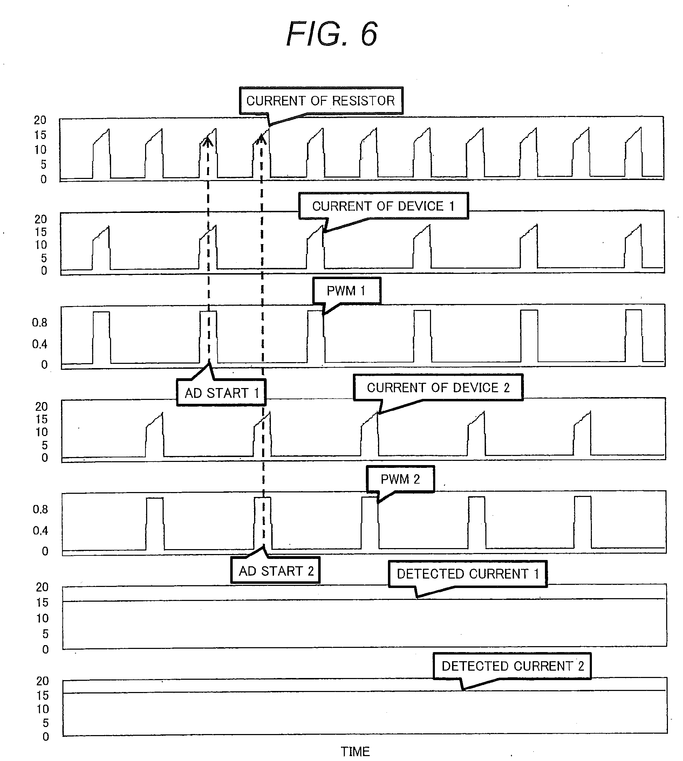

FIG. 4 shows a processing configuration of the A/D and current separator 26. Further, the start timing of an A/D converter is set in accordance with on-state periods of each of the power devices 6a and 6b as shown in FIG. 6. In this case, the on-state periods mutually appear due to the interleave operation of each of the power devices 6a and 6b. Thus, even a current detection device with one sampling and hold circuit or an A/D converter can detect the current flowing to each of the power devices 6a and 6b. The current computing unit 27 calculates the sum and difference of two kinds of current detected by the A/D and current separator 26.

### (Current equal control)

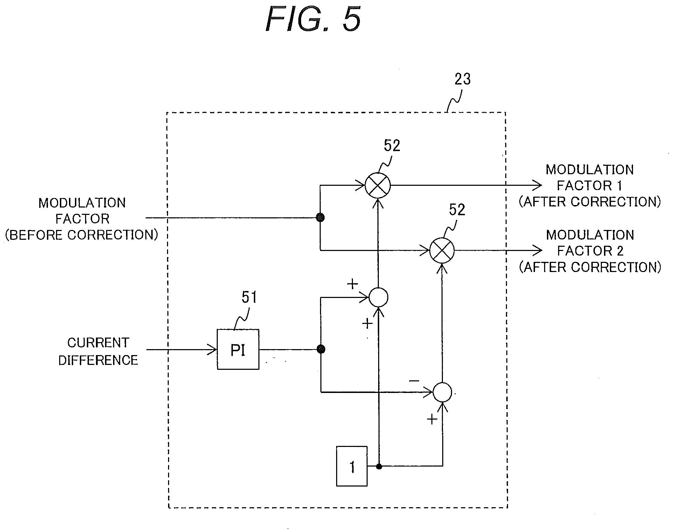

FIG. 5 is a functional block diagram of a modulation factor adjuster 23 to equally control the current of each boosting chopper. The difference of current calculated by the current computing unit 27 calculates an adjusting gain through a PI controller 51. Further, each modulation factor is adjusted using a multiplier 52 in addition and subtraction processes between the adjusting gain and 1.

Finally, the PWM controllers 24a and 24b generate a PWM (Pulse Width Modulation) control signal on the basis of a comparison between each modulation factor and carrier waves (triangular wave or sawtooth wave) from a carrier wave generator 28, and output an on/off control signal for each power device in accordance with a switching signal from a counter 29.

FIG. 6 shows waveforms of the current and control signal of each power device, the current of the current detection resistor 9, and the detected current. The start timing of converting from analog to digital is set at the on-state period of each power device. Specifically, it is determined from which of the plurality of power devices 6a and 6b the current flowing to the single current detection resistor 9 has come in a sampling process of the on-state period of each of the power devices 6a and 6b. Then, the current flowing to each of the power devices 6a and 6b is detected, and the on width of each power device is adjusted so as to substantially equalize the current of each power device.

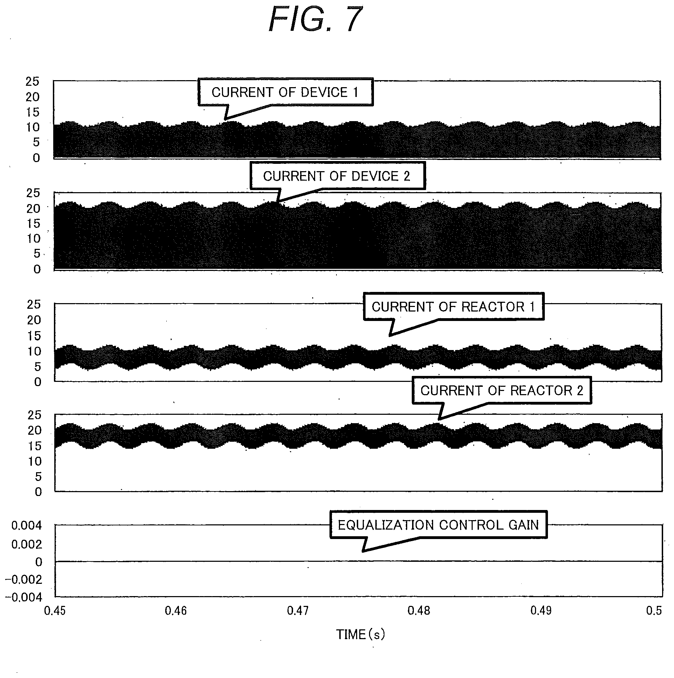

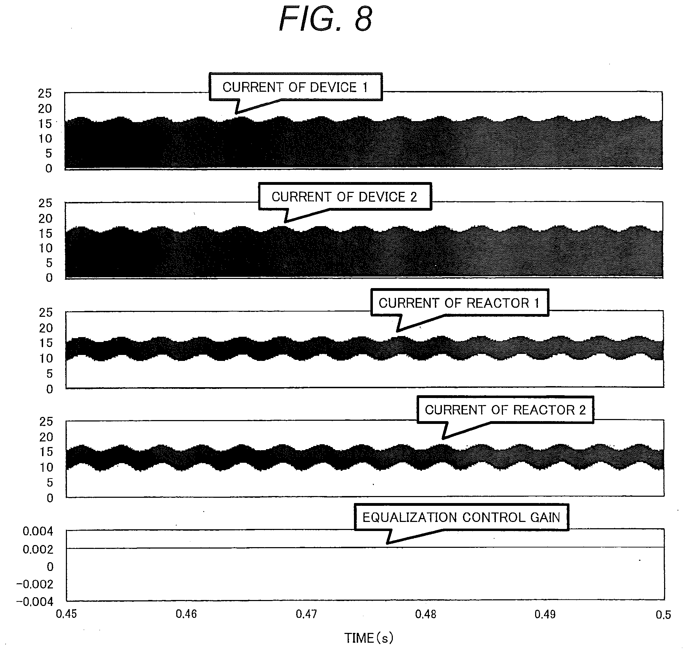

FIG. 7 and FIG. 8 show waveforms of the current of the power devices, the boosting reactors, and the equal control gain when the current equal control is on and off. As shown in FIG. 8, according to the control of the boost circuit of the embodiment as described above, the equal control gain is automatically adjusted by the current equal control, and the current of each power device can be substantially similarly controlled. Accordingly, the current detection circuit and control can be simplified, and thus a boost circuit, a motor driving module, and a refrigerating apparatus at low cost and with high efficiency can be provided.

### Second Embodiment

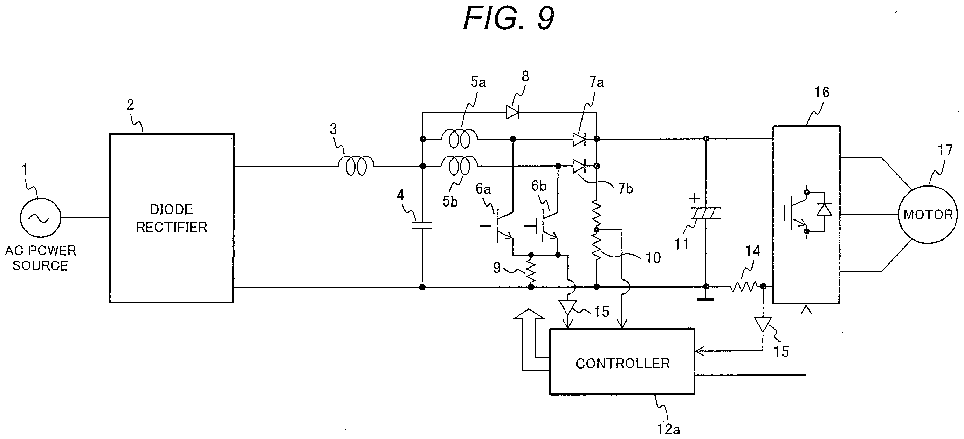

FIG. 9 shows a configuration of a motor driving apparatus according to a second embodiment of the present invention. The rectifying and boost circuit parts that convert from AC to DC are the same as those shown in FIG. 1. An inverter 16 is used on the DC output side of the boost circuit to drive a motor 17. A controller 12a generates PWM control signals for the boost circuit and the inverter to control the DC voltage and the motor. Using information such as the revolutions and current of the motor and the output voltage or the modulation factor (the ratio of the output voltage to the DC voltage) of the inverter, the optimum boosting target voltage is calculated to control the DC voltage. The boost circuit is controlled using the control configuration of FIG. 2 described in the first embodiment.

FIG. 10 shows an image of adjusting the DC voltage using the boost circuit in the motor driving apparatus. The operation of the boost circuit is stopped in the middle to low speed operation range, and the motor is controlled only by the PWM control of the inverter. The boost circuit is operated in the high speed operation range to adjust the DC voltage, and the current of the motor is reduced by the boosting control and the PWM control of the inverter. Further, the boosting voltage target value is adjusted to improve the efficiency of the entire system and to reduce the current of the motor. The adjusting method is realized by preparing, for example, a relation table between preliminarily-set boosting voltage target values and the rotating speed of motor.

Thus, if the motor driving apparatus of the embodiment is used, a motor with higher induced voltage designed can be adopted as compared to a case without the boost circuit, and accordingly the current of the motor and the loss of the inverter can be reduced in the middle to low speed range. The current of the inverter can be reduced by the boosting operation in the high speed range, and thus a lower-rating semiconductor switching device can be adopted.

### Third Embodiment

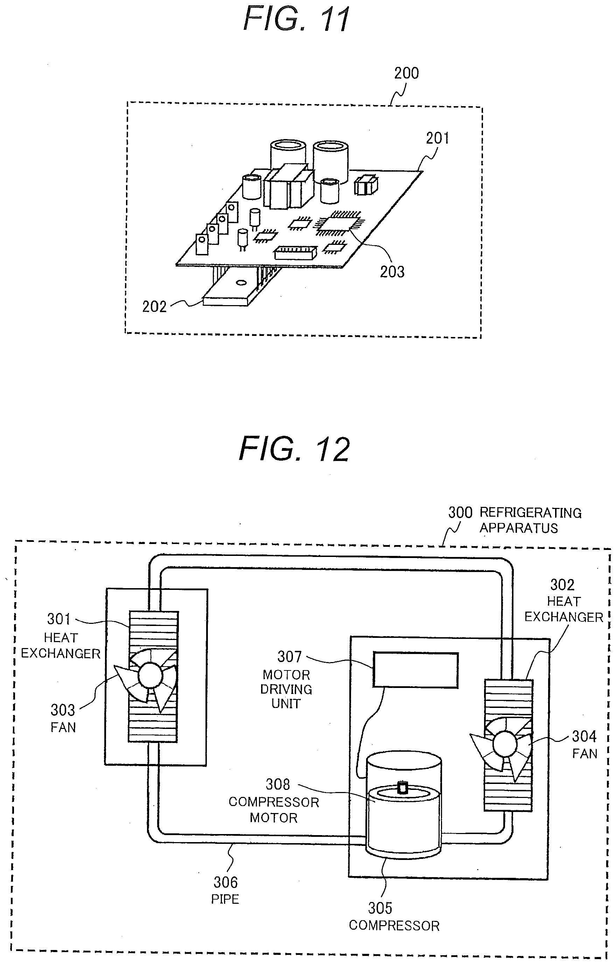

FIG. 11 is an external diagram of a motor driving module 200 according to a third embodiment of the present invention, and shows one configuration of a finished product. The module 200 is a motor driving module obtained by mounting a semiconductor switching device 202 on a substrate 201, and the boost circuit, the voltage current detection circuit, the controller, the inverter circuit, and the like illustrated in FIG. 10 are mounted on the substrate 201. The apparatus can be downsized by modularization, and the cost of the apparatus can be reduced. It should be noted that the module means a "normalized constitutional unit", and is configured using separable hardware/software components. Further, the above-described components are preferably configured on the same substrate in manufacturing. However, the substrate is not limited to one substrate. Accordingly, the above-described components may be configured on a plurality of circuit substrates incorporated in the housing.

According to the embodiment, the cost and volume of the entire product can be reduced, and thus the versatility and convenience of the motor driving system using the module of the embodiment can be improved.

### Fourth Embodiment

FIG. 12 shows a fourth embodiment of the present invention, that is, a configuration diagram of a refrigerating apparatus such as an air conditioner or refrigerator that drives a compressor motor using the motor driving module. A refrigerating apparatus 300 is an apparatus to condition temperatures, and is configured using heat exchangers 301 and 302, fans 303 and 304 that feed air to these heat exchangers, a compressor 305 that compresses and circulates a refrigerant, a pipe 306 in which the refrigerant flows, and a motor driving unit 307. It should be noted that a compressor motor 308 is arranged inside the compressor 305 using a permanent magnet synchronous motor or a three-phase induction motor. The motor driving unit 307 converts the AC power source to DC, and supplies the DC power to a motor driving inverter to drive the motor.

Using the motor driving module of the third embodiment, the boosting control of the DC voltage can be performed, and the motor can be driven with higher efficiency and in a wider range. Thus, the improvement of the efficiency and the cost reduction of the refrigerating apparatus can be realized.

## Claims

1. A motor driving module having an inverter (16) that drives a motor by controlling DC voltage, wherein
a boost circuit is provided on the input side of the inverter (16), and
the boost circuit comprising:
a rectifying circuit (2) connected to an AC power source;
a plurality of reactors that are connected in parallel to the positive electric potential side of the rectifying circuit;
a plurality of power devices (6a, 6b) that are connected in series to the plurality of reactors to turn on or off current; **characterized by**
a single resistor (9) that is connected between the plurality of power devices (6a, 6b) and the negative electric potential side of the rectifying circuit; and
a control unit (12, 12a) configured to determine from which of the plurality of power devices (6a, 6b) the current flowing to the single current detection resistor (9) has come, and alternately controls the plurality of power devices (6a, 6b) so that the current flowing to the plurality of power devices (6a, 6b) is substantially equalized, whereby the control unit controls an output DC voltage of the boost circuit for a boosting
wherein the control unit (12, 12a) configured to determine whether to stop the start of the boost circuit and adjusts the DC output voltage of the boost circuit for the boosting target voltage calculated by the control unit using at least one piece of information of the output voltage, the output power, and the control modulation, factor (ratio of output voltage to DC voltage) of the inverter (16), the frequency of a motor (17), and the current of the motor (17).

2. The motor driving module according to claim 1, wherein
the current of each power device (6a, 6b) is detected in a sampling process of the on section of each power device (6a, 6b) using detection devices such as a sampling and hold circuit and an A/D converter.

3. The motor driving module according to claim 1, wherein
a difference between current values detected by the power devices (6a, 6b) is calculated so as to substantially equalize the current of each power device (6a, 6b), and is input into a feedback controller to adjust the on width of each power device (6a, 6b).

4. The motor driving module according to claim 1, wherein
the output voltage of the boost circuit is detected to separate ripple components using a device such as a bandpass filter (31), and the ripple components of the output voltage are suppressed by adjusting an on/off control signal of each power device (6a, 6b).

5. A refrigerating apparatus comprising:
a heat exchanger (301, 302);
a fan (303, 304) that feeds air to the heat exchanger (301, 302);
a compressor (305) that -compresses and circulates a refrigerant; and
the motor driving module (200) according to claim 1 for driving a motor (308) for the compressor (305).

## Patentansprüche

1. Motoransteuermodul, das einen Wechselrichter (16) besitzt, der durch Steuern einer Gleichspannung einen Motor ansteuert, wobei
an der Eingangsseite des Wechselrichters (16) eine Verstärkerschaltung vorgesehen ist und
die Verstärkerschaltung Folgendes enthält:
eine Gleichrichterschaltung (2), die mit einer Wechselstromleistungsquelle verbunden ist;
mehrere Drosselspulen, die mit der Seite der Gleichrichterschaltung mit positivem elektrischen Potential parallelgeschaltet sind;
mehrere Leistungseinrichtungen (6a, 6b), die mit den mehreren Drosselspulen in Reihe geschaltet sind, um Strom ein- oder auszuschalten;
**gekennzeichnet durch**
einen einzelnen Widerstand (9), der zwischen die mehreren Leistungseinrichtungen (6a, 6b) und die Seite mit negativem elektrischen Potential der Gleichrichterschaltung geschaltet ist; und
eine Steuereinheit (12, 12a), die konfiguriert ist, zu bestimmen, von welcher der mehreren Leistungseinrichtungen (6a, 6b) der Strom, der durch den einzelnen Stromdetektionswiderstand (9) fließt, gekommen ist, und die mehreren Leistungseinrichtung (6a, 6b) abwechselnd derart steuert, dass der Strom, der zu den mehreren Leistungseinrichtungen (6a, 6b) fließt, im Wesentlichen ausgeglichen ist, wodurch die Steuereinheit eine Ausgangsgleichspannung der Verstärkerschaltung für eine Verstärkung steuert, wobei
die Steuereinheit (12, 12a) konfiguriert ist, zu bestimmen, ob sie das Starten der Verstärkerschaltung anhalten soll, und die Gleichstromausgangsspannung der Verstärkerschaltung für die Verstärkungszielspannung, die durch die Steuereinheit unter Verwendung mindestens eines Datenelements der Ausgangsspannung, der Ausgangsleistung und des Steuermodulationsfaktors (Verhältnis der Ausgangsspannung zur Gleichspannung) des Wechselrichters (16), der Frequenz eines Motors (17) und des Stroms des Motors (17) berechnet wird, anpasst.

2. Motoransteuermodul nach Anspruch 1, wobei
der Strom von jeder Leistungseinrichtung (6a, 6b) in einem Abtastvorgang des Einschaltabschnitts jeder Leistungseinrichtung (6a, 6b) unter Verwendung von Detektionseinrichtungen wie z. B. einer Abtast- und Halteschaltung oder eines Analog/Digital-Umsetzers detektiert wird.

3. Motoransteuermodul nach Anspruch 1, wobei
eine Differenz zwischen Stromwerten, die durch die Leistungseinrichtungen (6a, 6b) detektiert werden, berechnet wird, um den Strom von jeder Leistungseinrichtung (6a, 6b) im Wesentlichen auszugleichen, und in eine Rückkopplungssteuereinheit eingegeben wird, um die Einschaltbreite jeder Leistungseinrichtung (6a, 6b) anzupassen.

4. Motoransteuermodul nach Anspruch 1, wobei
die Ausgangsspannung der Verstärkerschaltung zu getrennten Welligkeitsanteilen unter Verwendung einer Einrichtung wie z. B. eines Bandpassfilters (31) detektiert wird und die Welligkeitsanteile der Ausgangsspannung durch Anpassen eines Ein/Aus-Steuersignals von jeder Leistungseinrichtung (6a, 6b) unterdrückt werden.

5. Kühlvorrichtung, die Folgendes umfasst:
einen Wärmetauscher (301, 302);
einen Lüfter (303, 304), der der Wärmetauscher (301, 302) Luft zuführt;
einen Kompressor (305), der ein Kältemittel komprimiert und umwälzt; und
das Motoransteuermodul (200) nach Anspruch 1, um einen Motor (308) für den Kompressor (305) anzusteuern.

## Revendications

1. Module pilote de moteur présentant un variateur (16) qui pilote un moteur en commandant une tension continue, dans lequel
un circuit survolteur est prévu du côté entrée du variateur (16), et
le circuit survolteur comprenant :
un circuit redresseur (2) connecté à une source d'alimentation en courant alternatif ;
une pluralité de bobines d'inductance qui sont connectées en parallèle au côté du potentiel électrique positif du circuit redresseur ;
une pluralité de dispositifs de puissance (6a, 6b) qui sont connectés en série à la pluralité de bobines d'inductance pour activer ou désactiver le courant ;
**caractérisé par**
une unique résistance (9) qui est connectée entre la pluralité de dispositifs de puissance (6a, 6b) et le côté du potentiel électrique négatif du circuit redresseur ; et
une unité de commande (12, 12a) configurée pour déterminer duquel de la pluralité de dispositifs de puissance (6a, 6b) le courant circulant vers l'unique résistance de détection de courant (9) est venu, et pour commander tour à tour la pluralité de dispositifs de puissance (6a, 6b) de telle sorte que le courant circulant vers la pluralité de dispositifs de puissance (6a, 6b) soit sensiblement égalisé, l'unité de commande commandant ainsi une tension continue de sortie du circuit survolteur pour un survoltage, l'unité de commande (12, 12a) étant configurée pour déterminer s'il faut arrêter le démarrage du circuit survolteur et pour régler la tension continue de sortie du circuit survolteur pour la tension cible de survoltage calculée par l'unité de commande en utilisant au moins une information parmi la tension de sortie, la puissance de sortie et le facteur de modulation de commande (rapport de la tension de sortie sur la tension continue) du variateur (16), la fréquence d'un moteur (17) et le courant du moteur (17).

2. Module pilote de moteur selon la revendication 1, dans lequel le courant de chaque dispositif de puissance (6a, 6b) est détecté dans un processus d'échantillonnage de la section de conduction de chaque dispositif de puissance (6a, 6b) en utilisant des dispositifs de détection tels qu'un circuit échantillonneur-bloqueur et un convertisseur A/N.

3. Module pilote de moteur selon la revendication 1, dans lequel une différence entre les valeurs de courant détectées par les dispositifs de puissance (6a, 6b) est calculée de manière à égaliser sensiblement le courant de chaque dispositif de puissance (6a, 6b) et est entrée dans un dispositif de commande à rétroaction pour régler la largeur de conduction de chaque dispositif de puissance (6a, 6b).

4. Module pilote de moteur selon la revendication 1, dans lequel la tension de sortie du circuit survolteur est détectée pour séparer les composantes d'ondulation en utilisant un dispositif tel qu'un filtre passe-bande (31), et les composantes d'ondulation de la tension de sortie sont supprimées en réglant un signal de commande marche/arrêt de chaque dispositif de puissance (6a, 6b).

5. Appareil de réfrigération comprenant :
un échangeur de chaleur (301, 302) ;
un ventilateur (303, 304) qui alimente en air l'échangeur de chaleur (301, 302) ;
un compresseur (305) qui comprime et fait circuler un réfrigérant ; et
le module pilote de moteur (200) selon la revendication 1 pour piloter un moteur (308) pour le compresseur (305).
